## Europäisches Patentamt

## European Patent Office

## Office européen des brevets

(19)

(11) Veröffentlichungsnummer: **0 058 230**
**B1**

(12) **EUROPÄISCHE PATENTSCHRIFT**

(45) Veröffentlichungstag der Patentschrift:
**14.01.87**

(51) Int. Cl.⁴: **G 01 T 1/202**

(21) Anmeldenummer: **81108436.7**

(22) Anmeldetag: **16.10.81**

(54) **Röntgen- und/oder Korpuskularstrahlungs-Halbleiterdetektor in integrierter Bauweise.**

(30) Priorität: **05.02.81 DE 3104030**

(43) Veröffentlichungstag der Anmeldung:
**25.08.82 Patentblatt 82/34**

(45) Bekanntmachung des Hinweises auf die Patenterteilung:
**14.01.87 Patentblatt 87/3**

(84) Benannte Vertragsstaaten:
**FR GB IT**

(56) Entgegenhaltungen:
**CH-A-464 364**

**IEEE TRANSACTIONS ON NUCLEAR SCIENCE, Band NS-15, Nr. 3, Juni 1968 NEW YORK (US) T.C. MADDEN et al.: "The use of semiconductors doped with isoelectronic traps in scintillation counting" Seiten 47-57**
**SOVIET PHYSICS-SOLID STATE, Band 7, Nr. 6, Dezember 1965 NEW YORK (US) F.M. BERKOWSKII: "Recombination radiation in GaAs under the action of individual alpha-particles" Seiten 1523, 1524**
**DAS OPTO-KOCHBUCH, TEXAS INSTRUMENTS DEUTSCHALND GMBH, 1. AUFLAGE, 1975, SEITEN 141 und 142**
**APPL. PHYSICS LETTERS, Bd. 9, 1966, S. 221-223**
**PHYSICAL REVIEW B, Bd. 11, 1975, Nr. 6, S. 2251-2259**
**PHYSICAL REVIEW B, Bd. 24, 15 Aug. 1981, Nr. 4, S.**

(73) Patentinhaber: **Siemens Aktiengesellschaft Berlin und München, Wittelsbacherplatz 2, D-8000 München 2 (DE)**

(72) Erfinder: **Glasow, Peter, Fichtestrasse 14, D-8520 Erlangen (DE)**
Erfinder: **Rühle, Wolfgang, Dr. Phys., Georg-Krauss- Strasse 2, D-8520 Erlangen (DE)**
Erfinder: **Weyrich, Claus, Dr. Phys., Untertaxet Weg 14, D-8035 Gauting (DE)**

(56) Entgegenhaltungen: (Fortsetzung)
**1971-1986**

## Beschreibung

Die vorliegende Erfindung bezieht sich auf einen Röntgen- und/oder Korpuskularstrahlungs-Detektor, wie er im Oberbegriff des Patentanspruchs 1 angegeben ist.

Für die Computer-Tomografie und für die Radiografie sind Detektoren für Röntgenstrahlung und/oder Korpuskularstrahlung erforderlich, die z.B. zur Vermeidung hoher Strahlenbelastung des Patienten hochempfindlich sein müssen. Um eine getreue Abbildung des zu untersuchenden Objekts zu erhalten, ist aber außerdem such exakte Proportionalität der analogen Detektorwerte erforderlich, wobei insbesondere keine Detektorsignal-Verzerrung durch Ermüdungseffekte, Nachleuchten und dergleichen auftreten darf. Ein weiteres wichtiges Erfordernis ist auch, daß der jeweilige Detektor trotz hoher Empfindlichkeit relativ klein sein muß, nicht zuletzt auch deshalb, damit hohe räumliche Auflösung zu erzielen ist.

Es gibt bereits eine große Anzahl von Detektoren für Röntgenstrahlen, und zwar außer den Ionisationskammern auch Halbleiterdetektoren aus Germanium, Silizium, Kadmium-Tellurid, Quecksilber-Jodid und dergleichen. Diese arbeiten auf der Basis eines fotoelektrischen Effekts. Nach dem Prinzip eines fotooptischen Effekts arbeiten Kombinationsdetektoren, die einen Szintillationskörper haben, dessen Szintillationsstrahlung dann mit Hilfe eines Fotodetektors in elektrisches Signal für den Computer umgesetzt wird. Ein solcher Kombinationsdetektor ist z.B. derjenige, der aus einem Natriumjodid-Kristall besteht, an den eine Silizium-Fotodiode mit lichtdurchlässigem Klebstoff befestigt ist. Andere Szintillationsmaterialien sind Cäsiumjodid, Wismut-Germaniumoxid, Kadmium-Wolframat. Szintillationskörper aus solchen Stoffen haben zwar relativ hohe Strahlungsabsorption, so daß die Szintillationskörper relativ klein sein können. Sie haben aber auch wesentliche Nachteile, die z.B. darin bestehen, daß sie ein Nachleuchten zeigen und/oder zu kleine Impulse liefern und/oder wenig Photonen pro nachzuweisendem Quant entstehen. Damit ist die Proportionalität bzw. Exaktheit der analogen Detektorwerte abhängig von den Vorgängen, die vor Aufnahme des einzelnen Detektorwertes abgelaufen sind.

Aus der Druckschrift CH-A-464 364 ist ein Röntgen- und/oder Korpuskularstrahlungs-Halbleiter-Detektor mit einem Szintillationskörper und mit einer Fotodiode mit Sperrschicht-Übergang und mit Elektroden bekannt. Dieser Szintillationskörper und die Fotodiode sind zwei Anteile eines einzigen monolithischen Halbleiterkörpers aus III-V-Halbleitermaterial. Im Bereich des den Szintillationskörper bildenden Anteils ist das Halbleitermaterial ein solches mit direktem Band-Band-Übergang. Das Halbleitermaterial des die Fotodiode bildenden Anteils hat gegenüber demjenigen des obengenannten anderen Anteils stark unterschiedliches Absorptionsverhalten für die durch die zu detektierende Strahlung erzeugten Fotonen. Die Funktionsweise dieses bekannten Detektors ist derart, daß im Szintillationskörper die zu detektierende, einfallende elektromagnetische Strahlung in solche mit derartiger Wellenlänge umwandelt, für die vorhandene Fotodiode günstige Effektivität als Empfänger bzw. optoelektronischer Wandler besitzt.

Aus "Das Opto-Kochbuch, Texas Instruments Deutschland GmbH" erste Auflage (1975), S. 141 und 142 ist eine siliziumdotierte Galliumarsenid-Lumineszenzdiode bekannt. Die physikalische Funktionsweise einer solchen Diode ist die, daß eingeprägter elektrischer Strom in Lichtstrahlung umgewandelt wird. Das für eine solche lichterzeugende Diode verwendete Galliumarsenid ist ein direkter Halbleiter. Für diese Lumineszenzdiode ohne Relevanz ist in anderem Zusammenhang bekannt, daß in entsprechender Weise mit Silizium dotiertes Galliumarsenid die Eigenschaft einer geschrumpften Bandlücke haben kann, nämlich, daß niederenergetische Ausläufer beim Leitungsband und höherenergetische Ausläufer beim Valenzband auftreten, zwischen denen elektrisch induzierte strahlungserzeugende Übergänge möglich sind.

Es ist Aufgabe der vorliegenden Erfindung, einen solchen für Röntgen- und/oder Korpuskularstrahlung geeigneten Halbleiterdetektor anzugeben, der eine Lösung des Problems ist, hohe Detektionsempfindlichkeit, geringen Raumbedarf und getreue Wiedergabe der analogen Detektorwerte zu bieten.

Diese Aufgabe wird mit einem Halbleiterdetektor nach dem Oberbegriff des Patentanspruchs 1 erfindungsgemäß mit den Merkmalen des Kennzeichens des Anspruchs 1 gelöst. Weitere Ausgestaltungen und Weiterbildungen der Erfindung gehen aus den abhängigen Ansprüchen hervor.

Die vorliegende Erfindung beruht auf einer Kombination einer Anzahl von verschiedenen Gedankengängen, die im erfindungsgemäßen Halbleiterdetektor verkörpert sind. Hohe Empfindlichkeit ist zum einen dadurch zu erreichen, daß man für den Szintillationskörper ein solches Material verwendet, das hohe interne Quantenausbeute von z.B. größer 10% hat und das außerdem auch einen geringen Selbstabsorptionseffekt aufweist. Weitere Gesichtspunkte sind möglichst hohe Absorption für die zu detektierenden Strahlungsquanten einerseits und höchstens geringfügiges Auftreten von Nachleuchten und ähnlichen störenden Effekten andererseits. Weiter ist durch integrierten Aufbau gemäß einem Merkmal der Erfindung dafür gesorgt, daß mit hohem Wirkungsgrad erzeugte Fotoquanten möglichst störungs- und verlustfrei in die vorgesehenen Fotodioden gelangen und dort absorbiert werden.

Für den Szintillationskörper des erfindungsgemäßen Halbleiterdetektors ist ein III-V-Verbindungshalbleitermaterial, insbesondere auf der Basis des Galliumarsenids, Galliumphosphids, Indiumantimonids... und dergleichen vorgesehen. Insbesondere Galliumarsenid, Indiumphosphid und Indiumantimonid haben eine genügend hohe spezifische Absorption für Röntgen- und Korpuskularstrahlung, so daß schon von dieser Seite her ein erfindungsgemäßer Halbleiterdetektor relativ geringe Abmessungen haben kann. Hohe Quantenausbeute an Lichtquanten, die durch absorbierte Strahlungsquanten der Röntgen- oder Korpuskularstrahlung ausgelöst worden sind, läßt sich durch günstige Störstellenkonzentration im Halbleitermaterial des Szintillationskörpers erzielen. Dies gilt insbesondere für Szintillationskörper, die als epitaktisch aufgewachsene Halbleiterschicht realisiert sind. Für einen erfindungsgemäßen Halbleiterdetektor ist darauf zu achten, daß der Szintillationskörper eine geringe Selbstabsorption hat. Unter Selbstabsorption versteht men den Effekt, daß in einem Halbleiterkörper mit insbesondere direktem Band-Band-Übergang (wie z.B. in Galliumarsenid) an einer Stelle des Körpers durch Absorption von Röntgenquanten erzeugte Lumineszenz-Lichtquanten wieder absorbiert werden, und zwar insbesondere auch mit Auftreten strahlungsloser Übergänge.

Geringe Selbstabsorptionseffekte erhält man bei Halbleitern mit indirektem Band-Band-Übergang, wie z.B. in Galliumphosphid (dotiert mit Zink und Sauerstoff). In einem solchen Halbleitermaterial beruht die erzeugte Lumineszenzstrahlung auf Störstellen-Störstellen- oder Störstellen-Band-Übergängen, die eine geringere Quantenenergie haben, als es dem Band-Band-Abstand dieses indirekten Halbleitermaterials entspricht. Lichtquanten solcher Übergänge werden nur zu einem ganz geringen Maße in solchen dotierten Halbleiterkörpern reabsorbiert und können die Oberfläche dieses Halbleiterkörpers im wesentlichen ungedämpft erreichen.

Eine zweite Möglichkeit geringen Selbstabsorptionseffekts bieten solche direkte. Halbleiter, die ein "band gap-shrinking" haben. Ein typischer Vertreter eines solchen direkten Halbleiters ist Galliumarsenid, das mit Silizium dotiert ist. Strahlende Übergänge haben dort eine Quantenenergie, die dem Energieabstand zwischen einem niedrigenergetischen Ausläufer des Leitungsbandes und einem höherenergetischen Ausläufer des Valenzbandes entspricht, so daß diese Quantenenergie kleiner als die dem Bandabstand im Galliumarsenid entsprechende Quantenenergie ist.

Eine weitere Variante, eine gemäß einem Merkmal der Erfindung geringe Selbstabsorption zu erhalten, ist die, einen Halbleiterkörper vorzusehen, der von seinem einen Ende zu seinem anderen Ende einen laufend zunehmenden Bandabstand hat. Ein Beispiel für ein Material für einen solchen Halbleiterkörper ist ein Gallium-Aluminiumarsenid-Mischkristall, in dem das Gallium:Aluminium-Verhältnis sich vom einen Ende des Halbleiterkörpers zum anderen Ende desselben hin kontinuierlich ändert. Ein an einem Ort des Halbleiterkörpers durch Strahlungsabsorption erzeugtes Lichtquant mit der Quantenenergie des dort herrschenden Bandabstandes wird im Halbleiterkörper auf seinem Weg in Richtung zunehmenden Bandabstandes nicht mehr absorbiert und kann dessen Oberfläche ohne weiteres erreichen. In der Gegenrichtung dazu würde das Lichtquant zwar nach kurzer Wegstrecke absorbiert werden. Im Mittel ergibt sich damit grob abgeschätzt eine Ausbeute von 50% des theoretischen Maximalwertes. Diese Ausbeute wird sogar dadurch noch verbessert, daß in der Gegenrichtung laufende Lichtquanten nicht nur absorbiert werden, sondern auch entsprechend einem Photon-Recycling erneut strahlenden Übergang mit Photonenemission erzeugen können, wobei für diese Photonen wiederum 50% Wahrscheinlichkeit des Weges in Richtung zunehmenden Bandabstandes und damit verschwindender Absorption besteht.

Für die Erfindung ist eine Kombination eines direkten Halbleiters der zweiten oben beschriebenen Ausführungsvariante mit der Variante mit sich räumlich ändernder Energielücke von besonderem Interesse.

Die vorangehende Beschreibung des Erfindungsgedankens betraf den Szintillationskörper, für den durch die Wahl der voranstehend erläuterten Bedingungen und Umstände die Möglichkeit eröffnet ist, III-V-Halbleitermaterial zu verwenden. Solches Halbleitermaterial ist aber auch als Fotodiode mit Sperrschicht-Übergang oder mit pn-Übergang geeignet. Unter Ausnutzung der der Erfindung zugrunde liegenden Gedanken kann ein einziger monolithischer Halbleiterkörper aus III-V-Halbleitermaterial derart aufgebaut werden, daß ein erster Anteil desselben als Szintillationskörper zu verwenden ist und ein zweiter Anteil desselben die Fotodiode bildet, wobei beide Anteile ohne körperliche bzw. äußere Grenzfläche ineinander übergehen. Der Szintillationskörper-Anteil besteht z.B. aus $Ga_{1-x}Al_xAs$ mit von Ort zu Ort (stetig) anwachsendem x, d.h. anwachsendem Aluminiumanteil, wobei der Aluminiumanteil in Richtung auf den Fotodioden-Anteil des Halbleiterkörpers größer wird.

Zwecks leichteren Verständnisses der Erfindung und zur Erläuterung optimierter Bemessungen und optimaler Materialauswahl sei auf die nachfolgende, anhand der Figuren gegebene Beschreibung von Ausführungsbeispielen der Erfindung hingewiesen.

Fig.1 zeigt einen erfindungsgemäßen Halbleiter-Detektor.

Fig.2 zeigt ein erläuterndes Diagramm des Band-Schemas.

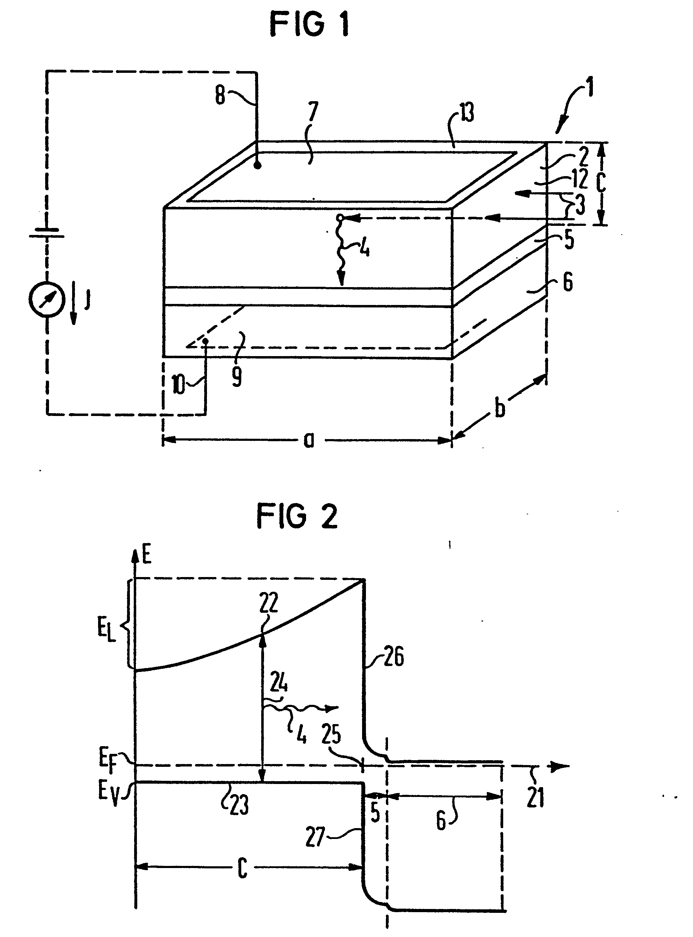

Fig.1 zeigt insgesamt mit 1 bezeichnet einen erfindungsgemäßen Halbleiterdetektor, der in integrierter Bauweise einen Szintillationskörper 2 umfaßt, in den, wie oben beschrieben, die mit 3 bezeichnete Röntgen- oder Korpuskularstrahlung eingestrahlt wird. Diese eingestrahlte Strahlung 3 erzeugt im Szintillationskörper 2 Lichtemission, d.h. Photonen. Mit 4 ist eine solche auf Absorption der Strahlung 3 beruhende Photonen-Emission schematisch dargestellt. Mit der für Photonen-Emission bekannten Wahrscheinlichkeit gelangt dieses Photon 4 in den Bereich des Fotodioden-Anteils des Halbleiterdetektors 1. Dieser Fotodioden-Anteil bzw. der physikalisch als Fotodiode wirksame Anteil ist ein Sperrschicht-Übergang, z.B. ein pn-Übergang. Ein solcher pn-Übergang ist z.B. in der Weise zu realisieren, daß man an den Körper 2 angrenzend eine Halbleiterschicht 5 vorsieht, wobei der Körper 2 und die Halbleiterschicht 5 aus Halbleitermaterial mit jeweils einander entgegengesetztem Leitungstyp bestehen. Zum Beispiel besteht der Szintillationskörper 2 aus p-leitendem Gallium-Aluminiumarsenid, das mit Silizium dotiert ist. Dazu passend kann die Schicht 5 aus undotiertem oder schwach dotiertem n-leitenden Galliumarsenid mit einer Störstellenkonzentration von z.B. $10^{15} . cm^{-3}$ bestehen. In dem Bereich der gemeinsamen Grenzfläche zwischen Szintillationskörper 2 und Halbleiterschicht 5 liegt dann somit der einer Ausführungsform eines Sperrschicht-Übergangs entsprechende pn-Übergang vor, in dem aus dem Photon bzw. Lichtquant 4 ein Elektronen-Lochpaar gebildet wird (wie dies von jeder Fotodiode her gut bekannt ist).

Mit 6 ist beim Ausführungsbeispiel der Fig.1 ein Substratkörper bezeichnet. Er dient hier in erster Linie dazu, den Halbleiterdetektor 1 nach der Technologie der epitaxialen Abscheidung herzustellen, nämlich indem auf der (in der Fig.1 oberen) Oberfläche des Substratkörpers 6 zunächst das Aufwachsen der Schicht 5 vorgenommen wird, auf der dann weiter das Material des Szintillationskörpers 2 epitaktisch aufgewachsen wird. Epitaktisches Aufwachsen führt zu besonders störungsfreiem Halbleitermaterial, was wiederum geringe Verluste der für den Halbleiterdetektor 1 relevanten physikalischen Effekte gewährleistet. Es sei darauf hingewiesen, daß der Substratkörper 6 nach Herstellung des aus der Schicht 5 und dem Szintillationskörper 2 bestehenden Gebildes von diesem z.B. durch Abätzen entfernt werden kann. Wird der Substratkörper 6 nicht entfernt, sollte er z.B. entartet N+-dotiert sein.

Im vorletzten Absatz war auf die Elektronen-Lochpaar-Erzeugung hingewiesen. Dieses in dem Sperrschicht-Übergang (zwischen 2 und 5) entstehende Elektronen-Lochpaar befindet sich im Wirkungsbereich eines elektrischen Feldes, das zwischen zwei Elektroden des Halbleiterkörpers 1 herrscht, wovon die eine Elektrode 7 wenigstens weitgehend die in der Fig.1 obere Oberfläche des Szintillationskörpers 2 bedeckt und den Anschluß 8 hat, und von denen die zweite Elektrode 9 die in der Fig.1 untere Seite des Substratkörpers 6 bedeckt (und, da sie in der Darstellung der Fig.1 an sich nicht sichtbar ist, durch eine gestrichelte Umrandung lediglich angedeutet ist). Der Anschluß der Elektrode 9 ist mit 10 bezeichnet. Zwischen den Anschlüssen 8 und 10 erhält man einen elektrische Stromstärke J, die auf Absorption von Lichtquanten oder Photonen 4 beruht, die durch Absorption der Strahlung 3 in dem einen Anteil des Halbleiterdetektors 1 bildenden Szintillationskörper 2 erzeugt worden sind.

Im Regelfall ist für die Verwendung eines erfindungsgemäßen Halbleiterdetektors 1 in einem Computer-Tomografen oder in einem Radiografen eine relativ hohe räumliche Auflösung für die Strahlung 3 gefordert. Das bedeutet, daß die am Szintillationskörper 2 relevante Eintrittsfläche 12 für die Strahlung 3 (bei dem in der Fig.1 dargestellten Ausführungsbeispiel) vorteilhafterweise dieser geforderten Auflösung angepaßte Abmessung haben sollte. Zum Beispiel empfiehlt es sich, die Abmessung b 1 mm bis 13 mm groß und die Abmessung c 100 µm bis 500 µm groß zu machen. Zum Beispiel läßt sich eine Abmessung c, d.h. eine Schichtdicke eines durch epitaktische Abscheidung erzeugten Szintillationskörpers 2 mit 300 µm unter Anwendung bekannter Verfahrenstechnologie herstellen. Für die Abmessung a, die bei wie in der Fig.1 einfallender Strahlung 3 für die Länge des zur Verfügung stehenden Absorptionsweges der Strahlung 3 wesentlich ist, sind Abmessungen zwischen 3 mm und 50 mm zu empfehlen. Zum Beispiel ist eine Abmessung a mit 15 mm für eine Strahlung 3 mit einer Quantenenergie von 40 bis 125 keV gut angepaßt, denn die mittlere Weglänge der Absorption ist außer von der Kernladungszahl (Protonen- und Neutronenzahl) des Halbleitermaterials des Szintillationskörpers 2 auch von der Quantenenergie der Strahlung 3 abhängig.

Der Vollständigkeit halber sei darauf hingewiesen, daß man die Strahlung 3 auch in schrägem Winkel (beispielsweise zur Fläche 12 bzw. 13) in den erfindungsgemäßen Halbleiterdetektor einfallen lassen kann, womit Verlängerung der zur Verfügung stehenden mittleren Absorptionslänge erzielt werden kann.

Für die Halbleiterschicht 5 ist z.B. eine Abmessung von 2 µm bis 20 µm günstig. Der Substratkörper 6 kann im Grundsatz eine beliebige Dicke haben, jedoch empfiehlt es sich, dessen Dicke nur so groß zu wählen, wie dies für die Ausführung der Epitaxie notwendig ist, um ein eventuelles Entfernen des Substratkörpers zu erleichtern.

Für das Halbleitermaterial des Szintillationskörpers 2 ist eine Dotierung von

$1 \times 10^{18}$ bis $1 \times 10^{19} cm^{-3}$ zu empfehlen.

Bereits oben ist darauf hingewiesen worden, daß zur Vermeidung störenden Selbstabsorptionseffekts im Szintillationskörper 2 Variationsmöglichkeiten zur Verfügung stehen, nämlich beispielsweise für diesen Körper 2 ein III-V-Halbleitermaterial mit indirektem Übergang (für Ladungsträger im Bänderschema) vorzusehen. Ein solches Material ist beispielsweise Galliumphosphid, das mit Zink und Sauerstoff dotiert ist. Es handelt sich dabei um ein solches Material, von dem man spricht, daß es Leuchtzentren hat. In diesen Leuchtzentren erzeugte Photonen bzw. Lichtquanten 4 haben praktisch keine Absorption in diesem indirekten Halbleitermaterial und sie gelangen ohne weiteres bis in den Bereich des oben erwähnten Sperrschicht-Übergangs (zwischen 2 und 5).

Die andere bereits erwähnte Variante ist die, ein Halbleitermaterial mit sogenanntem direkten Übergang, wie z.B. Galliumarsenid, zu verwenden, das mit Silizium dotiert ist. Mit dieser Siliziumdotierung läßt sich nämlich eine solche Veränderung im Bänderschema des Galliumarsenids erreichen, die dazu führt, daß die Quantenenergie der arzeugten Photonen 4 kleiner ist als der exakte Bandabstand des Galliumarsenids, so daß diese Photonen 4 theoretisch und in der Praxis nur geringfügig auf ihrem Weg durch das Material des Szintillationskörpers 2 zum Sperrschicht-Übergang der Fotodiode absorbiert werden.

Oben ist auch bereits eine weitere Variante erläutert, bei der für den Szintillationskörper 2 ein III-V-Halbleiter-Mischkristallmaterial verwendet wird mit in Richtung auf den Sperrschicht-Übergang hin zunehmendem Bandabstand.

Fig.2 zeigt ein Diagramm eines Profils des Bandabstands für eine Ausführungsform nach Fig.1, und zwar entsprechend der dritten Variante mit räumlich sich änderndem Bandabstand. Die Abszisse 21 entspricht der Ortskoordinate, wobei mit dem Doppelpfeil c auf die in der Fig.1 angegebene Schichtdicke des Szintillationskörper-Anteils 2 hingewiesen ist. Die Bezugszeichen 5 und 6 in Fig.2 weisen auf die Bereiche der Halbleiterschicht 5 und des Substratkörpers 6 in der Fig.1 hin. Auf der Ordinate ist die Energie E aufgetragen. Der Nullpunkt der Ordinate $E_F$ ist das Energie-Niveau der Fermi-Kante. Mit $E_L$ und $E_V$ ist auf die Bandkante des Leitungsbandes und die des Valenzbandes hingewiesen.

Der Kurvenzug 22 zeigt gegenüber dem konstant bleibenden Energie-Niveau 23 des Valenzbandes die gemäß dieser Variante der Ausführungsform der Erfindung vorgesehene räumliche Zunahme des Bandabstandes, der mit dem Doppelpfeil 24 für einen Ort in die Fig.2 eingetragen ist. Ein z.B. an dem dem Doppelpfeil 24 entsprechenden Ort erzeugtes Lichtquant 4 erfährt auf seinem Weg in Richtung zum Ort des Sperrschicht-Übergangs 25 wegen des vergleichsweise zu seiner Quantenenergie stets größeren Bandabstands keine Absorption und kann praktisch verlustlos in den Bereich der mit 26 und 27 kenntlich gemachten Potentialabfälle des Sperrschicht-Übergangs gelangen. Die Potentialverläufe in den in Fig.2 mit 5 und 6 bezeichneten Bereichen der Schicht 5 und des Substratkörpers 6 sind üblicher Art und bedürfen keiner weiteren Erläuterung.

**Patentansprüche**

1. Röntgen- und/oder Korpuskularstrahlungs-Halbleiterdetektor mit einem Szintillationskörper und mit einer Fotodiode mit Sperrschicht-Übergang und mit Elektroden, wobei der Szintillationskörper (2) und die Fotodiode zwei Anteile eines einzigen monolithischen Halbleiterkörpers (1) aus einem III-V-Halbleitermaterial sind, wobei das direkten Übergang aufweisende Halbleitermaterial des den Szintillationskörper (2) bildenden Anteils und das Material des die Fotodiode (5) bildenden Anteils voneinander stark unterschiedliches Absorptionsverhalten für die durch die zu detektierende Strahlung (5) erzeugten Photonen (4) haben, gekennzeichnet dadurch, daß das Material des den Szintillationskörper (2) bildenden Anteils ein Halbleitermaterial ist, dessen Quantenenergie strahlender Übergänge dem Energieabstand zwischen einem niedrigenergetischen Ausläufer des Leitungsbandes und einem höherenergetischen Ausläufer des Valenzbandes entspricht.

2. Detektor nach Anspruch 1, gekennzeichnet dadurch, daß das Material des den Szintillationskörper (2) bildenden Anteils Silizium-dotiertes Galliumarsenid mit einer Siliziumdotierung mit wenigstens $1 \times 10^{18} cm^{-3}$ ist.

3. Detektor nach Anspruch 1 oder 2, gekennzeichnet dadurch, daß die an den Szintillationskörper (2) angrenzende Schicht (5) der Fotodiode aus undotiertem oder nur schwach dotiertem Galliumarsenid besteht.

4. Detektor nach Anspruch 1, gekennzeichnet dadurch, daß das Material des den Szintillationskörper (2) bildenden Anteils ein Material mit Leuchtzentren ist, die strahlende Rekombination liefern.

5. Detektor nach Anspruch 4, gekennzeichnet dadurch, daß das Material des den Szintillationskörper (2) bildenden Anteils Galliumphosphid mit Zink und Sauerstoff dotiert ist.

6. Detektor nach einem der Ansprüche 1 bis 5, gekennzeichnet dadurch, daß die Schicht (5) der Fotodiode und der Szintillationskörper (2) epitaktisch aufgewachsen sind.

## Claims

1. A semiconductor detector for X-rays and corpuscular radiation comprising a scintillation body and a photo-diode having a blocking layer junction and electrodes, where the scintillation body (2) and the photo-diode are two portions of a single monolithic semiconductor body (2) consisting of a III-V-semiconductor material, where the semiconductor material having a direct junction of the portion forming the scintillation body (2), and the material of the portion forming the photo-diode (5) exhibit a considerably different absorption behaviour towards the photons (4) which are produced by the radiation (5) to be detected, characterised in that the material of the portion forming the scintillation body (2) is a semiconductor material whose quantum energy of radiating junctions corresponds to the energy gap between a low-energy branch of the conduction band and a high-energy branch of the valence band.

2. A detector as claimed in Claim 1, characterised in that the material of the portion forming the scintillation body (2) is silicon-doped gallium arsenide having a silicon doping of at least $1 \times 10^{18} cm^{-3}$.

3. A detector as claimed in Claim 1 or Claim 2, characterised in that the layer (5) of the photo-diode which borders on the scintillation body (2) consists of an undoped or weakly doped gallium arsenide.

4. A detector as claimed in Claim 1, characterised in that the material of the portion forming the scintillation body (2) is a material with luminous centres which provide radiating recombination.

5. A detector as claimed in Claim 4, characterized in that the material of the portion forming the scintillation body (2) is gallium phosphide doped with zinc and oxygen.

6. A detector as claimed in one of Claims 1 to 5, characterised in that the layer (5) of the photo-diode and the scintillation body (2) are epitaxially grown.

## Revendications

1. Détecteur de rayonnement X et/ou de rayonnement corpusculaire à semiconducteurs comportant un corps à scintillation et une photodiode comportant une jonction à couche de blocage et des électrodes, et dans lequel le corps à scintillation (2) et la photodiode constituent deux composants d'un corps semiconducteur monolithique unique (1) constitué en un matériau semiconducteur(III-V), et dans lequel le matériau semiconducteur, fournissant la jonction directe, de la partie constituant le corps à scintillation (2) et le matériau de la partie constituant la photodiode (5) possèdent des comportements à l'absorption, qui diffèrent fortement l'un de l'autre, pour les photons (4) produits par le rayonnement (5) devant être détecté, caractérisé par le fait que le matériau de la partie constituant le corps à scintillation (2) est un matériau semiconducteur, pour lequel l'énergie quantique de jonctions rayonnantes correspond à la bande interdite entre une queue de faible énergie de la bande de conduction et une queue d'énergie supérieure de la bande de valence.

2. Détecteur suivant la revendication 1, caractérisé par le fait que le matériau de la partie constituant le corps à scintillation (2) est de l'arseniure de gallium dopé au silicium avec un dopage au silicium égal au moins à $1 \times 10^{18} cm^{-3}$.

3. Détecteur suivant la revendication 1 ou 2, caractérisé par le fait que la couche (5), qui jouxte le corps à scintillation (2) de la photodiode est constitué par de l'arseniure de gallium non dopé ou seulement faiblement dopé.

4. Détecteur suivant la revendication 1, caractérisé par le fait que le matériau de la partie constituant le corps à scintillation (2) est un matériau comportant des centres luminescents, qui fournissent une recombinaison rayonnante.

5. Détecteur suivant la revendication 4, caractérisé par le fait que le matériau de la partie constituant le corps en scintillation (2) est du phosphure de gallium dopé avec du zinc et de l'oxygène.

6. Détecteur suivant l'une des revendications 1 à 5, caractérisé par le fait que la couche (5) de la photodiode et le corps à scintillation (2) sont formés par croissance épitaxiale.

## FIG 1

## FIG 2